# EUROPÄISCHE PATENTSCHRIFT

(11) **EP 2 597 216 B1**
(45) Veröffentlichungstag und Bekanntmachung des Hinweises auf die Patenterteilung: **16.03.2016**
(21) Anmeldenummer: 12193874.0
(22) Anmeldetag: 22.11.2012
(51) Int. Cl.: E04B 1/76

(54) **Geräteträger mit Isolierung**
Device holder with insulation
Support avec isolant

(30) Priorität: 23.11.2011 CH 18742011
(43) Veröffentlichungstag der Anmeldung: 29.05.2013
(73) Patentinhaber: AGRO AG, 5502 Hunzenschwil (CH)
(72) Erfinder: Eggenschwiler, Martin, 4714 Aedermannsdorf (CH)
(74) Vertreter: Rentsch Partner AG

(56) Entgegenhaltungen:
- WO-A1-88/04388
- DE-A1- 3 609 047
- DK-B- 150 392
- GB-A- 2 299 845
- GB-A- 2 365 941

## Beschreibung

Die Erfindung betrifft einen Geräteträger mit einer Isolierung, der zur Befestigung eines Geräts, insbesondere eines elektrischen Geräts, an einer Gebäudewand vorgesehen ist, nach dem Oberbegriff des unabhängigen Patentanspruchs.

Es bestehen verschiedene Lösungen für die Befestigung von elektrischen Geräten, wie etwa Schalterdosen und Lampenanschlüsse, oder anderen Einrichtungen an einer Gebäudewand, wie etwa einer Aussen- oder Innenfassade, Zimmerwänden, Decken oder auch Bodenflächen. Dabei werden in der Regel Geräteträger verwendet, die auf einer Wandfläche befestigt und von einer Isolierung der Wand z. B. mit Dämmplatten umgeben sind. Es können Geräteträger verwendet werden, die eine Basisplatte, die an einer innen liegenden festen Wandkonstruktion befestigt wird, und einen Gerätehalter aufweisen, der über ein Trägerelement beabstandet zur Basisplatte angeordnet ist. Da die auf der Wandkonstruktion aufzubringenden Materialien, wie Isolationsmaterial, Verputzmaterial, etc. unterschiedlich dick sein können, ist es wünschenswert, den Abstand zwischen Basisplatte und Gerätehalter variieren zu können. Derartige Geräteträger sind z. B. aus EP 0710751 A2 oder WO 90/08240 bekannt.

Für die Isolierung der Gebäudewand wird Isolationsmaterial z. B. in Form von Isolierstoffplatten zugeschnitten und um den Geräteträger herum an der Wandfläche befestigt. Im Bereich des Geräteträgers verbleibt in der Regel ein Zwischenraum, der nicht isoliert ist und eine Wärmebrücke bildet, so dass die Effektivität der Wandisolierung verringert wird. Daher werden teilweise die Zwischenräume zwischen Geräteträger und Isolationsmaterial ausgefüllt, z. B. ausgeschäumt, um so die Isolationswirkung zu erhöhen. Diese Vorgehensweise ist jedoch zeitaufwendig und erhöht die Baukosten der Gebäudewand.

Innerhalb der Dämm- oder Verputzmaterialien können entlang der Gebäudewand Kabelführungen erforderlich sein, die mittels der Geräteträger zu den elektrischen Geräten geführt werden können. Die Führung der Kabel entlang der Wand und in eine Gerätedose am Gerätehalter soll eine einfache und unkomplizierte Elektrifizierung der Gebäudewand ermöglichen. Zur Isolation der Gebäudewand muss wiederum das Isolationsmaterial für die Kabelführungen am Gerätehalter ausgeschnitten und ggf. mit zusätzlichem Material umhüllt werden. Insbesondere bei Geräteträgern mit einer komplex ausgebildeten Aussenkontur mit mehreren unterschiedlichen Durchmessern ist die Präparation des Isolationsmaterials, das um den Geräteträger anzubringen ist, kompliziert und zeitraubend. Ferner können von einem Facharbeiter, der zum Bau von Gebäudewänden ausgebildet ist, Details in Bezug auf die Elektrifizierung der Gebäudewand bei der Installation des Gerätehalters leicht übersehen werden.

In der EP1422800 A1 ist z. B. ein Geräteträger gezeigt, der das Anbringen von Isolationsmaterial um den Geräteträger herum erleichtern soll, da dessen Aussenseite allseitig eben und ohne vorstehende Teile ist. Isolationsplatten können an den äusseren ebenen Flächen des Geräteträgers angelegt werden. Der Geräteträger weist ein Basiselement zum Befestigen an einer Wandfläche, ein auf das Basiselement aufsetzbares Aufbauelement, das die ebenen Aussenflächen des Geräteträgers bildet, und eine Montageplatte, welche das Aufbauelement verschliesst, auf. Das Aufbauelement ist als quaderförmiger Hohlkasten ausgebildet und weist ein grosses Innenvolumen auf. Kabel können durch Öffnungen in Basiselement und Montageplatte sowie durch das Innenvolumen des Hohlkastens geführt werden. Das Innenvolumen des Hohlkastens stellt jedoch eine Wärmebrücke in der Isolierung einer Gebäudewand dar, da es einen grossen, nicht isolierten Raum einnimmt. Zur Verbesserung der Isolierung kann das Innenvolumen nach der Durchführung der Kabel ausgeschäumt werden, wodurch sich jedoch wiederum die Montagezeiten verlängern und die Materialkosten erhöhen.

Aus der CH701113 A1 ist ein Geräteträger zur Befestigung an einer thermisch zu isolierenden Bauwerksoberfläche bekannt, der die Anpassungsarbeiten für angrenzend zu montierende Isolierstoffplatten vereinfachen und Wärmebrücken vermeiden soll. Hierfür ist der Geräteträger aus zwei fest miteinander verbundenen Isolierschichten aufgebaut, die aus Isoliermaterial bestehen, das z. B. dem Material der Isolierstoffplatten entspricht. Eine Innenschicht ist zum direkten Aufsetzen auf die Bauwerkoberfläche vorgesehen und eine Aussenschicht wird auf die Innenschicht aufgeklebt. In der Aussenschicht ist eine Öffnung vorgesehen, in der ein Gerätehalter mit Abstand zur Wand der Öffnung angeordnet wird. Der Zwischenraum zwischen Öffnungswand und Gerätehalter wird mit einem als Trägerelement dienenden Material durch Giesstechnik ausgefüllt, wobei das Trägerelement mechanisch höher belastbar ist als das Isoliermaterial. Nach dem Aufsetzen der Aussenschicht auf die Innenschicht liegt die Unterseite des Gerätehalters auf der Oberseite der Innenschicht auf. Zur Ausbildung eines Kabelkanals wird anschliessend durch den Gerätehalter und die Innenschicht ein Durchsteckkanal eingearbeitet oder dieser ist bereits in der Innenschicht vorgesehen. Der Geräteträger kann nun mit den Durchsteckkanälen auf ein aus einer Wand ragendes Kabelrohr aufgesetzt und z. B. durch Kleben oder Verdübeln an der Bauwerksoberfläche befestigt werden. Diese Variante eines Geräteträgers ist aufwendig in der Herstellung, da unterschiedliche Dämmmaterialien verwendet und unmittelbar an den Elementen des Gerätehalters befestigt werden. Ein einfaches Montieren des Geräteträgers an der Bauwerksoberfläche ist kaum möglich, da das bereits am Gerätehalter befestigte Dämmmaterial und die daran angeklebte Trägerschicht den Zugang zu den Kabeldurchführungen und die Ausrichtung des Geräteträgers gegenüber der Bauwerksoberfläche erschweren.

Die GB 2299845 A1 offenbart eine feuerfeste Schutzumhüllung für eine Vorrichtung, z. B. für ein Ventil. Die Schutzumhüllung wird durch einen Stapel von Lamellen, wobei jede Lamelle so zugeschnitten ist, dass sie entsprechend ihrer Position im Stapel einen Teil der Vorrichtung umhüllt und an der Vorrichtung anliegt.

Es ist eine Aufgabe der vorliegenden Erfindung einen Geräteträger mit einer Isolierung bereitzustellen, der eine einfache und zuverlässige Montage des Geräteträgers an einer Gebäudewand und eine effiziente Isolierung der Gebäudewand ermöglicht, der auf unterschiedliche bauliche Gegebenheiten angepasst werden kann und mit einfach zu verarbeitendem Isoliermaterial auskommt.

Ferner ist es eine Aufgabe eine Isolierung für einen Geräteträger zur Verfügung zu stellen, die in einfacher Weise am Geräteträger und an einer Gebäudewand angeordnet werden kann, die eine zuverlässige Isolierung der Gebäudewand erlaubt, an unterschiedliche Gegebenheiten eines Geräteträgers angepasst werden kann und kostengünstig in der Herstellung ist.

Diese Aufgabe wird durch einen Geräteträger nach dem unabhängigen Anspruch gelöst. Vorteilhafte Ausgestaltungen und verschiedene Varianten gehen aus den Unteransprüchen hervor.

Ein Geräteträger zur Befestigung eines Geräts, insbesondere eines elektrischen Geräts, an einer Gebäudewand nach der vorliegenden Erfindung umfasst ein Basiselement mit einer Basisfläche zur Befestigung an der Gebäudewand und einen Gerätehalter zur Aufnahme eines Geräts mit einer der Basisfläche gegenüberliegenden Frontseite. Basiselement und Gerätehalter können einstückig ausgebildet sein, setzen sich vorteilhafter Weise jedoch aus zwei oder mehr Elementen zusammen, um auf unterschiedliche bauliche Gegebenheiten eingehen zu können und die Wandmontag zu erleichtern. Die Frontseite des Geräteträgers kann nach Fertigstellung der Wandoberfläche durch Aufbringen von Dämmmaterial, Verputzmaterial und dergleichen z. B. im Wesentlichen mit der Wandoberfläche abschliessen. Im Fall einer Gerätedose als Gerätehalter kann die Frontseite z. B. durch den Rand der Dose gebildet werden und die Dose kann somit zur Wandoberfläche hin offen bleiben und ggf. durch eine Abdeckung verschlossen werden. Der Geräteträger kann optional ein längliches Trägerelement aufweisen, das mit einem Ende von dem Basiselement abragt und am anderen Ende den Gerätehalter trägt. Das Trägerelement kann z. B. einstückig mit dem Basiselement ausgebildet sein.

In einer Ausführungsform ist eine zumindest zweiteilige Isolierung vorgesehen, die den Geräteträger zwischen der Basisfläche und der Frontseite umfangsseitig umgibt. Es sind zumindest ein erstes Isolationsteil und ein zweites Isolationsteil vorgesehen, die jeweils eine Innenkontur aufweisen, die zumindest einem Teilbereich einer Umfangskontur des Geräteträgers entspricht. Die Innenkontur bildet somit eine Negativform von wenigstens einem Teilbereich einer Umfangskontur, welche die Positivform bildet, des Basiselements und/oder des Gerätehalters und/oder ggf. des Trägerelements. Das erste und das zweite Isolationsteil liegen mit der Innenkontur zumindest bereichsweise formschlüssig am Basiselement und am Gerätehalter an. Ferner liegen sie formschlüssig an einander anschliessend an. Somit umfassen das erste und das zweite Isolationsteil gemeinsam das Basiselement, ggf. das Trägerelement und den Gerätehalter und schliessen mit der Innenkontur zumindest bereichsweise dicht daran an. Der Aussenumfang des Geräteträgers wird vollständig umschlossen.

Zur Veranschaulichung der Erfindung wird eine Längsrichtung durch den Geräteträger definiert, die im Wesentlichen entlang der Verbindungsachse von Basiselement und Gerätehalter verläuft. Ferner kann die Ausrichtung des Trägerelements, falls vorhanden, die Längsrichtung des Geräteträgers definieren. Die Längsrichtung des Geräteträgers muss nicht senkrecht zu einer Gebäudewand orientiert sein, sondern kann in einem anderen Winkel dazu vorgesehen werden. Dabei sollen vorzugsweise aber die Basisfläche und die Frontseite im Wesentlichen parallel zur Gebäudewand verlaufen.

Der Geräteträger kann z. B. wie in einer der Anmeldungen CH Nr. 00866/11 und CH Nr. 00867/11 der Anmelderin ausgebildet sein. Diese Anmeldungen werden daher in Bezug auf die Ausgestaltung eines Geräteträgers, der zur Befestigung eines Geräts an einer Gebäudewand vorgesehen ist und der ein Basiselement, ein Trägerelement und einen Gerätehalter zur Aufnahme eines Geräts umfasst, vollumfänglich in Bezug genommen. Das Trägerelement kann demnach mit einem Ende von dem Basiselement abragen. Der Gerätehalter kann am anderen Ende des Trägerelements angeordnet und von ausserhalb der Gebäudewand zugänglich sein. Wenigstens ein Einführelement für elektrische Leitungen kann seitlich des Trägerelements vorgesehen sein und in das Innere des Trägerelements münden.

Die zumindest zweiteilige Isolierung des Geräteträgers lässt die Basisfläche und die Frontseite des Geräteträgers frei zugänglich und umschliesst ihn vollständig zwischen der Basisfläche und der Frontseite. Dabei liegt die Innenkontur von erstem und zweitem Isolationsteil vorzugsweise zumindest im Umfangsbereich der Frontseite und/oder im Umfangsbereich der Basisfläche am Geräteträger an, d. h. der Geräteträger wird am Frontende und am Basisende umschlossen. Die Innenkontur soll derart an Teilbereichen der Umfangskontur des Geräteträgers formschlüssig anschliessen, dass im Wesentlichen möglichst kein Luftaustausch zwischen Frontende und Basisende in Längsrichtung des Geräteträgers erfolgen kann. Vorzugsweise schliesst die Innenkontur dicht am Geräteträger, bzw. zumindest am Basiselement und am Gerätehalter an. Zwischen zwei Umfangsbereichen des Geräteträgers, die von der Innenkontur der Isolierung umschlossen sind, kann zwischen Geräteträger und Isolierung ein Zwischenraum verbleiben, an dem erstes und/oder zweites Isolationsteil nicht am Geräteträger anliegen. Der Zwischenraum ist somit von erstem und zweitem Isolationsteil und Geräteträger eingeschlossen, so dass im Wesentlichen kein Luftaustausch erfolgen kann. Vorzugweise liegt die Isolierung jedoch über die gesamte Länge des Geräteträgers an dessen Umfang an. Die Innenkontur ist hierfür der Umfangskontur nachgebildet. Beispielsweise kann das erste Isolationsteil eine erste Umfangshälfte als ersten Teilbereich der Umfangskontur und das zweite Isolationsteil eine zweite Umfangshälfte als zweiten Teilbereich der Umfangskontur abdecken, wobei sich die Innenkonturen von erstem und zweitem Isolationsteil über deren gesamte Länge erstrecken.

Durch die Zweiteilung kann die Isolierung in einfacher Weise am Geräteträger angebracht und von diesem abgenommen werden. Das erste Isolationsteil und das zweite Isolationsteil bilden gemeinsam die zweiteilige Isolierung, wobei die beiden Isolationsteile jeweils Anschlussflächen aufweisen, an welchen sie aneinander formschlüssig zu liegen kommen. Dabei bilden die Anschlussflächen vorzugsweise eine Auflageebene über die gesamte Länge der Isolationsteile, so dass erstes und zweites Isolationsteil über ihre gesamte Länge flächig an einander anliegen. Die Anschlussflächen sind dabei vorzugsweise plane Flächen, können aber auch eine gekrümmte, gewellt oder stufige Form haben. Die Innenkonturen von erstem und zweitem Isolationsteil sind in ihrer Formgebung dem Teilbereich am Umfang des Geräteträgers nachgebildet, den sie abdecken, bzw. isolieren. Dabei kann der Teilbereich das Trägerelement, das Basiselement und/oder den Gerätehalter oder eine Teilfläche davon umfassen. Die Innenkonturen von erstem und zweitem Isolationsteil bedecken somit den jeweiligen Teilbereich und schmiegen sich formschlüssig an die Oberfläche von Trägerelement, Basiselement und/oder Gerätehalter an. Dabei kommen gleichzeitig die Anschlussflächen der beiden Isolationsteile aneinander zu liegen, so dass der Geräteträger in Umfangsrichtung vollständig umschlossen ist.

Die Zweiteilung der Isolierung ermöglicht das Anbringen der Isolierung nachdem zumindest das Basiselement oder auch der gesamte Geräteträger ohne Isolierung an einer Wandkonstruktion befestigt wurde. Die Isolierung ist somit bei der Montage des Geräteträgers nicht hinderlich. Nach der Montage und ggf. nach der Installation von elektrischen Leitungen durch den Geräteträger und ggf. an einem Gerät kann die Isolierung z. B. von zwei Seiten an den Geräteträger angesetzt werden. Vorzugsweise werden erstes und zweites Isolationsteil jeweils von gegenüberliegenden Seiten des Geräteträgers an diesen angefügt. Alternativ können die Isolationsteile von einer Seite z. B. nach einander über den Geräteträger aufgesetzt werden. Durch die angepasste Innenkontur der Isolationsteile entstehen keine Zwischenräume zwischen Geräteträger und Isolierung und Wärmebrücken werden somit eliminiert. Die Aufteilung der Isolierung in ein erstes und ein zweites Isolationsteil erfolgt bespielweise entlang einer Schnittlinie durch die Längsachse des Geräteträgers. Das erste Isolationsteil und das zweite Isolationsteil weisen dabei im Wesentlichen in Längsrichtung des Geräteträgers verlaufende Anschlussflächen auf. Die Aufteilung kann auch quer zur Längsachse derart verlaufen, dass das erste Isolationsteil und das zweite Isolationsteil im Wesentlichen quer zur Längsrichtung des Geräteträgers verlaufende Anschlussflächen aufweisen. Z. B. umgibt das erste Isolationsteil einen Bereich des Geräteträgers mit kleinem Durchmesser und das zweite Isolationsteil einen Bereich mit grossem Durchmesser. Ferner kann eine Trennlinie zwischen erstem und zweitem Isolationsteil auch schräg zur Längsrichtung, z. B. als gerade Linie oder treppenartig, verlaufen.

In einer einfachen Ausführungsform können das erste Isolationsteil und das zweite Isolationsteil im Wesentlichen jeweils eine Hälfte der Isolierung bilden, die an sich gegenüberliegenden Umfangsseiten des Geräteträgers an diesem formschlüssig anliegen.

Grundsätzlich kann die Isolierung aber auch mehr als zwei Isolationsteile umfassen, wie nach folgend an Hand verschiedener Ausführungsbeispiele erläutert wird. Beispielsweise können das erste und das zweite Isolationsteil selbst nochmals geteilt sein oder es können zusätzliche Abstands- oder Zwischenteile zwischen erstem und zweitem Isolationsteil vorgesehen werden. In einer Variante kann zwischen erstem und zweitem Isolationsteil wenigstens ein Zwischenelement vorgesehen sein, das mit Anschlussflächen an den Anschlussflächen von erstem und zweitem Isolationsteil anschliesst. Auf diese Weise kann eine Isolierung für bestimmte, insbesondere auch unregelmässige Aussenkonturen eines Geräteträgers vorgesehen werden, indem dessen Umfangskontur derart in Teilbereiche unterteilt wird, dass mehrere in einfacher Weise zu fertigende Isolationsteile resultieren, die unabhängig von einander am Geräteträger angeordnet werden. Daraus ergibt sich ein modularer Aufbau der Isolierung. Die einzelnen Elemente und Teile der Isolierung weisen jeweils Anschlussflächen auf, wie sie vorher bereits für das erste und zweite Isolationsteil beschreiben wurden.

Vorzugsweise sind das erste und das zweite Isolationsteil abnehmbar am Geräteträger angeordnet sind. Somit kann die Isolierung z. B. auch als Verpackung verwendet werden. Der Geräteträger kann zwischen den Isolationsteilen problemlos transportiert werden. Ferner erleichtert die Aussenform der Isolierung, die Lagerung von Geräteträgern, beispielsweise können sie in einfacher Weise gestapelt werden. Zur Montage des Geräteträgers wird die Verpackung in Form der Isolationsteile von diesem abgenommen und nach der Montage des Geräteträgers an der Wand wieder angesetzt. Auch zur Wartung des Geräteträgers oder der Einrichtungen innerhalb des Geräteträgers können die Isolationsteile falls erforderlich wieder abgenommen werden.

In einer Ausgestaltung ist zumindest eines der Isolationsteile reibschlüssig am Geräteträger, also am Trägerelement, Basiselement und/oder Gerätehalter angeordnet. Das zweite Isolationsteil kann ebenfalls am Geräteträger oder auch am ersten Isolationsteil reibschlüssig angebracht werden. Alternativ können die beiden Isolationsteil durch eine reibschlüssige Verbindung an ihren Anschlussflächen mit einander verbunden werden und formschlüssig am Geräteträger gehalten werden. Die Isolationsteile können somit durch einfaches Auf- oder Zusammenstecken am Geräteträger angebracht werden und halten an diesem durch eine Reibschlussverbindung. Ein Verkleben oder ausschäumen ist nicht erforderlich.

Das erste und/oder zweite Isolationsteil kann demnach an den Anschlussflächen Verbindungselemente aufweisen, die zum vorzugsweise lösbaren Verbinden von erstem und zweitem Isolationsteil dienen. Wie beschrieben können die Verbindungselemente einen Reibschluss bilden. Beispielsweise kann eine Steckverbindung gegeben sein, bei der von einer der Anschlussflächen eines ersten Isolationsteils eine Leiste abragt, die in eine Nut einer gegenüberliegenden Anschlussfläche eines zweiten Isolationsteils eingreift. Zum anbringen der Isolierung an dem Geräteträger sind daher keine zusätzlichen Befestigungsmittel, wie etwa Schrauben oder Klebemittel, erforderlich. Derartige Verbindungselemente können zudem durch Überlappungen und Überschneidungen die Isolationskapazität der Isolierung verbessern und Wärmebrücken verringern.

Grundsätzlich können auch andere Verbindungen vorgesehen werden, insbesondere auch nichtlösbare Verbindungen, wie etwa Rast- oder Schnappverbindungen. Verbindungselemente können an allen Anschlussflächen der einzelnen Modulelemente und - teile der Isolierung zu deren Verbindung vorgesehen werden.

Ein Aussenumfang der Isolierung kann quaderförmig mit zu einander rechtwinkligen Flächen ausgebildet sein, so dass er plane Anlageflächen für Isolationsformplatten bietet, die entlang der Wandkonstruktion zur Isolierung der Wand angebracht werden. Die Quaderform ist dabei vorzugsweise derart vorgesehen, dass die Anlageflächen senkrecht zur Wandoberfläche ausgerichtet sind. Insbesondere für den Fall, dass die Längsrichtung des Geräteträgers nicht senkrecht zur Wandoberfläche verläuft, kann dadurch das Anfügen von Isolationsformplatten an die Isolierung des Geräteträgers erleichtert werden. Die Wandisolierung kann somit ohne Zwischenräume an die Geräteträgerisolierung anschliessen. Vorzugsweise ist die Länge der Isolierung des Geräteträgers, bzw. die Länge der Isolationsteile auf die Dicke der Isolationsformplatten abgestimmt. Ebenso wie die Länge des Geräteträgers auf die Höhe der endgültigen Gebäudewand abgestimmt werden kann, wie in den Anmeldungen CH Nr. 00866/11 und CH Nr. 00867/11 der Anmelderin beschrieben ist.

Als Material für die einzelnen Module der Geräteträgerisolierung wird vorzugsweise ein Material mit den gleichen Dämmwerten, wie ein umgebendes Wandisolationssystem verwendet. Es kann z. B. expandiertes Polystyrol verwendet werden. Vorzugsweise können die Module aus Vollmaterial z. B. durch Formschaumverfahren hergestellt werden. Dabei kann die Aufteilung der Isolierung in ein erstes und ein zweites Isolationsteil derart erfolgen, dass Hinterschneidungen an einem Isolationsteil vermieden werden und einfache Herstellungsformen für das Formschäumen entstehen. Die Module können auch schichtartig aufgebaut werden. Dabei können zwischen verschiedenen Schichten isolierende Luftpolster vorgesehen werden.

In einer Ausführungsform eines Geräteträger nach der Erfindung können erstes und zweites Isolationsteil derart ausgebildet sein, dass die Innenkontur von erstem und/oder zweitem Isolationsteil an einem Frontende eine Gerätehalteraussparung entsprechend der Umfangskontur des Gerätehalters und an einem Basisende eine Basiselementaussparung entsprechend der Umfangskontur des Basiselements und ggf. auch entsprechend des Trägerelements aufweist. Die die Gerätehalteraussparung und die Basiselementaussparung können somit auf unterschiedliche Durchmesser in Bezug auf die Längsachse des Geräteträgers abgestimmt werden. Eine solche Aufteilung ist z. B. vorteilhaft, wenn ein Trägerelement eines Basiselements schlanker ist als eine Gerätedose eines Gerätehalters. Das erste und/oder das zweite Isolationsteil können auch zwischen Gerätehalteraussparung und Basiselementaussparung getrennt sein. Das erste und/oder das zweite Isolationsteil weisen dann ein Basisisolierelement und ein Frontisolierelement auf, wobei Basisisolierelement und Frontisolierelement zumindest teilweise quer zur Längsrichtung verlaufende Anschlussflächen aufweisen, die an einander anliegen, wenn sie am Geräteträger angeordnet sind. Grundsätzlich ist es auch denkbar, dass sich die Trennung in Basisisolierelement und Frontisolierelement nicht nach der Aufteilung in Aussparungen für Basiselement und Gerätehalter richtet, sondern sich eine solche Aussparung über Basisisolierelement und Frontisolierelement erstreckt. Im Sinne eines modularen Aufbaus der Isolierung des Geräteträgers kann wenigstens ein Abstandselement mit einer Innenkontur entsprechend Basisisolierelement oder Frontisolierelement vorgesehen sein, das in Längsrichtung zwischen Basisisolierelement und Frontisolierelement vorgesehen ist und mit seinen Anschlussflächen an diesen anliegt. Dadurch kann die Innenkontur von Basisisolierelement oder Frontisolierelement verlängert und die Isolierung auf unterschiedliche Längen eines Geräteträgers angepasst werden. Es ist auch möglich, dass ein solches Abstandselement eine Innenkontur aufweist, die einem Übergang von Gerätehalteraussparung zu Basiselementaussparung entspricht.

In einer anderen Ausführungsform eines Geräteträgers mit Isolierung nach der vorliegenden Erfindung sind erstes, bzw. zweites Isolationsteil als röhrenartiges Basisisolationsteil, bzw. Frontisolationsteil vorgesehen. Die Isolationsteile weisen dabei eine Durchgangsöffnung auf, die vorzugsweise zentriert im Isolationsteil vorgesehen und vollständig von Isoliermaterial umgeben ist. Der Aussenumfang von Basisisolationsteil und Frontisolationsteil ist vorzugsweise quaderförmig mit planen Flächen ausgebildet, wie vorher beschrieben.

Nach der Erfindung ist das erst Isolationsteil als röhrenartiges Basisisolationsteil mit einer Innenkontur entsprechend der Aussenkontur des Basiselements und ggf. auch des Trägerelements und das zweite Isolationsteil als röhrenartiges Frontisolationsteil mit einer Innenkontur entsprechend der Aussenkontur des Gerätehalters vorgesehen. Die Innenkontur wird dabei von der Umfangskontur der Durchgangsöffnungen von Basisisolationsteil und Frontisolationsteil gebildet, die der äusseren Umfangskontur des Geräteträgers entspricht. Dabei kann wenigstens ein Abstandsisolationsteil zwischen Basisisolationsteil und Frontisolationsteil vorgesehen sein, dessen Innenkontur im Wesentlichen der Innenkontur des Basisisolationsteil entspricht. Das Abstandsisolationsteil ist vorzugsweise als rechteckige Scheibe ausgebildet und weist eine Durchgangsöffnung mit einer Innenkontur entsprechend der Aussenkontur des Umfangs des Basiselements und ggf. auch des Trägerelements auf. Grundsätzlich kann das Basisisolationsteil aber auch zwei- oder mehrteilig ausgebildet sein. Das Abstandsisolationsteil dient zur Verlängerung des Basisisolationsteils und somit zur Anpassung an unterschiedliche Längen eines Basiselements, bzw. eines Trägerelements. Die Anschlussflächen mehrer Abstandsisolationsteile kommen dabei aufeinander zu liegen und schliessen sich an die Anschlussflächen von Basisisolationsteil und Frontisolationsteil an. Die Anschlussflächen können Verbindungselemente z. B. in Form von Zapfen oder anderen Vorsprüngen aufweisen, die in Vertiefungen einer gegenüberliegenden Anschlussfläche eingreifen.

Zur Montage kann zunächst das Basiselement mit dem Trägerelement des Geräteträgers an der Wandfläche befestigt werden. Anschliessend wird das röhrenartige Basisisolationsteil auf das Trägerelement aufgesetzt. Dabei liegt die Innenkontur der Durchgangsöffnung des Basisisolationsteils an der Aussenkontur des Trägerelements an. Es werden so viele Abstandsisolationsteile auf dem Trägerelement angeordnet bis dieses über seine gesamte Länge mit einer Isolierschicht umgeben ist. Anschliessend wird der Gerätehalter auf das Trägerelement aufgesetzt und an diesem befestigt. Dies kann z. B. derart erfolgen, wie es in den Anmeldungen CH Nr. 00866/11 und CH Nr. 00867/1 1 der Anmelderin beschrieben ist. Zuletzt wird das röhrenartige Frontisolationsteil über den Gerätehalter gesetzt bis die Anschlussflächen von letztem Abstandsisolationsteil und Frontisolationsteil an einander anliegen.

Wie oben beschrieben kann die Isolierung modular aus einer Mehrzahl von Modulen zusammensetzt sein, wobei als Module erste Isolationsteile, zweite Isolationsteile, Basisisolierelemente, Frontisolierelemente, Abstandselemente, Zwischenelemente, Basisisolationsteile, Frontisolationsteile und/oder Abstandsisolationsteile vorgesehen sein können. Der modulare Aufbau ermöglicht es auf verschiedenartige Ausgestaltungen von Geräteträgern einzugehen und eine dazu passende Isolierung bereitzustellen. Beispielsweise können auch Geräteträger mit zwei oder mehr parallel verlaufenden Trägerelementen mit einer erfindungsgemässen Isolierung versehen werden. Hierfür kann ein Zwischenelement vorgesehen werden, das zwischen zwei Trägerelemente eingesetzt werden kann. Das Zwischenelement weist an gegenüberliegenden Seiten eine Oberflächenkontur aufweist, die dem Teilbereich der Umfangskontur der Trägerelemente entspricht, zwischen die es eingesetzt ist. Die beiden Oberflächenkonturen des Zwischenelements liegen am Umfangsbereich je eines Trägerelements an und gehören somit zur Innenkonturen für das jeweilige Trägerelement.

Zur Anpassung der Länge der Isolierung an die Länge des Geräteträgers kann wenigstens ein Isolationsteil oder anderes Modulteil oder -element der Isolierung eine Längenskala in Längsrichtung des Geräteträgers aufweisen. Das Teil oder Element kann dann an passender Länge an Hand der Skala abgelängt, z. B. abgeschnitten werden.

Ferner ist eine Isolierung für einen Geräteträger vorgesehen, die zumindest ein erstes Isolationsteil und ein zweites Isolationsteil aufweist, die jeweils eine Innenkontur aufweisen, die einem Teilbereich einer Umfangskontur des Geräteträgers entspricht, wobei erstes und zweites Isolationsteil formschlüssig an dem Geräteträger und an einander anschliessend anliegen, so dass sie den Geräteträger gemeinsam zwischen einer Basisfläche und einer Frontseite umfangsseitig umgeben. Die Isolierung kann erste Isolationsteile, zweite Isolationsteile, Basisisolierelemente, Frontisolierelemente, Abstandselemente, Zwischenelemente, Basisisolationsteile, Frontisolationsteile und/oder Abstandsisolationsteile wie sie oben beschrieben wurden umfassen.

Ein Geräteträger und eine Isolierung (nicht beansprucht) nach der vorliegenden Erfindung können vorteilhaft in Wärmedämmverbundsystemen, hinterlüfteten Fassaden oder dergleichen im Innen- und Aussenbereich eingesetzt werden. Die Isolierung für den Geräteträger kann dabei in einfacher Weise bei unterschiedlichen Wandisolationssystemen verwendet und nötigenfalls entsprechend angepasst werden. Die Geräteträger mit einer Isolierung nach der Erfindung können insbesondere für die Installation und Betriebnahme von elektrischen Geräten verwendet werden, da Kabelführungen innerhalb des Geräteträgers verlaufen und die Isolierung eng an der Aussenkontur des Geräteträgers anliegen kann. Die modulare Bauweise der Isolierung ermöglicht es mehrere unterschiedliche Modulteile oder - elemente für unterschiedliche Elemente eines Geräteträgers vorzuhalten. Beispielsweise kann auch der Geräteträger modular aufgebaut sein, so das beispielsweise zu einem Basiselement unterschiedliche Gerätehalter oder umgekehrt vorgesehen werden können. Auch können unterschiedliche Trägerelemente für ein Basiselement bereitgestellt werden. Aus den unterschiedlichen Isoliermodulen können dann die zu einer Kombination von Basiselement, Trägerelement und Gerätehalter passenden Module ausgewählt werden.

Der Geräteträger mit der Isolierung nach der Erfindung bildet einen kompakten festen Geräteträgerblock, wobei die Isolationsteile und -elemente die Aufnahme von auf den Geräteträger wirkenden Querkräften unterstützen und eine sichere Halterung des Geräteträgers an der Gebäudewand ermöglichen.

Bevorzugte Ausführungsformen der Erfindung werden im Folgenden anhand der Zeichnungen dargestellt, die lediglich zur Erläuterung dienen und nicht einschränkend auszulegen sind. Aus den Zeichnungen offenbar werdende Merkmale der Erfindung sollen einzeln und in jeder Kombination als zur Offenbarung der Erfindung gehörend betrachtet werden. In den Zeichnungen zeigen:
- Fig. 1:: Explosionsdarstellung einer ersten Ausführungsform eines Geräteträgers mit einer Isolierung nach der vorliegenden Erfindung mit einem ersten und einem zweiten Isolationsteil jeweils mit Anschlussflächen in Längsrichtung;
- Fig. 2:: eine Variante der ersten Ausführungsform eines Geräteträgers mit einer Isolierung mit geteiltem erstem und zweitem Isolationsteil;
- Fig. 3:: Explosionsdarstellung einer zweiten Ausführungsform eines Geräteträgers mit einer Isolierung nach der vorliegenden Erfindung mit einem ersten und einem zweiten Isolationsteil jeweils mit Anschlussflächen quer zur Längsrichtung;
- Fig. 4:: eine Variante der zweiten Ausführungsform eines Geräteträgers mit einer Isolierung mit mehreren Abstandsisolationsteilen und
- Fig. 5:: Explosionsdarstellung einer dritten Ausführungsform eines Geräteträgers mit einer Isolierung nach der vorliegenden Erfindung mit Zwischenelementen.

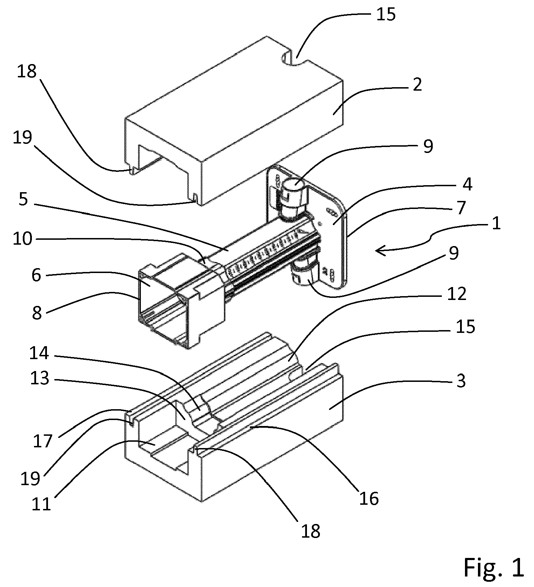

In Figur 1 ist eine erste Ausführungsform eines Geräteträgers 1 zur Befestigung eines Geräts an einer Gebäudewand mit einer zweiteiligen Isolierung bestehend aus einem ersten Isolationsteil 2 und einem zweiten Isolationsteil 3 nach der vorliegenden Erfindung gezeigt. Der Geräteträger 1 weist ein Basiselement 4, ein Trägerelement 5 und einen Gerätehalter 6 auf. Der Geräteträger 1 ist im Wesentlichen wie in einer der Anmeldungen CH Nr. 00866/1 1 und CH Nr. 00867/11 der Anmelderin beschrieben aufgebaut. Auf eine ausführliche Beschreibung des Geräteträgers 1 wird daher hier verzichtet und für Details in Bezug auf die Merkmale des Geräteträgers 1, insbesondere das Basiselement 4, das Trägerelement 5 und den Gerätehalter 6 und deren Befestigung, auf die Beschreibung in den genannten Anmeldungen verwiesen.

Der Geräteträger 1 weist eine Basisfläche 7 auf, die sich am Basiselement 4 auf der dem Trägerelement 5 gegenüberliegenden Seite befindet. Der Gerätehalter 6 weist eine Frontseite 8 auf, die in dieser Ausführungsform durch einen Rand einer als Gerätehalter 6 dienenden Gerätedose gebildet wird. Die Frontseite 8 ist am Gerätehalter 6 gegenüber dem Trägerelement 5 angeordnet. Die Längsrichtung des Trägerelements definiert die Längsrichtung des Geräteträgers 1. Das Trägerelement 5 weist eine Skala auf, die zur Einstellung einer bestimmten Länge des Geräteträgers 1 dient. Die Länge des Geräteträgers wird z. B. durch den Abstand zwischen Basisfläche 7 und Frontseite 8 definiert. Durch seitlich am Trägerelement 5 vorgesehene Einführelemente 9 können z. B. elektrische Kabel durch das Innere des Trägerelements 5 zum Gerätehalter 6 geführt werden. Bei der Montage des Geräteträgers 1 an einer Gebäudewand wird das Basiselement 4 an einer Wandfläche befestigt, z. B. mittels Verschraubung. Dabei kann der Gerätehalter 6 bereits am Trägerelement 5 befestigt sein oder erst nach der Wandmontage angebracht werden.

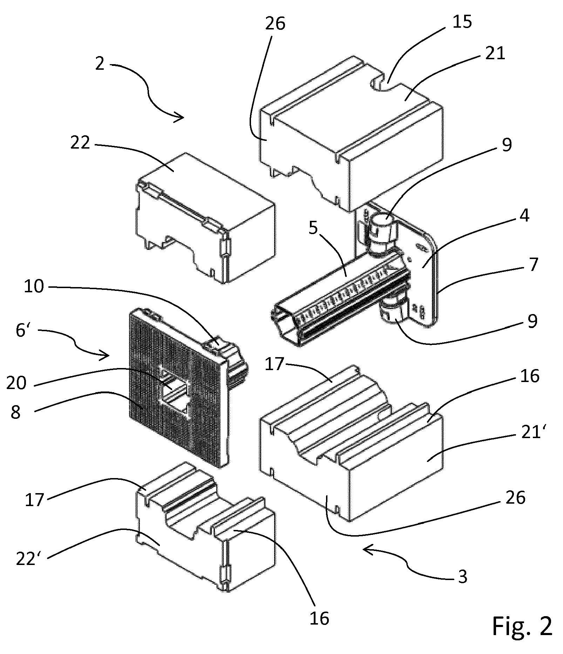

Wie in Figur 1 ersichtlich ist, weist die Umfangskontur des Geräteträgers 1 diverse Abstufungen und unterschiedliche Durchmesser in Bezug auf die Längsachse des Geräteträgers 1 auf. Beispielsweise ist der Gerätehalter 6 als würfelförmige Dose mit grossem Durchmesser ausgebildet, während das Trägerelement 5 einen kleinen Durchmesser aufweist. Gegenüber der Frontseite 8 ragt vom Boden des Gerätehalters 6 eine Schürze 10 in Richtung des Trägerelements 5 ab, die in montiertem Zustand das Ende des Trägerelements 5 umschliesst. Das Trägerelement 5 weist dagegen eine eher hexagonale Umfangsform mit Führungsleisten an der Aussenseite auf, wie z. B. aus Figur 2 ersichtlich ist. Ferner bilden die Einführelemente 9 eine charakteristische Formgebung der Aussenkontur des Geräteträgers. Die Aussenkontur um den Umfang des Geräteträgers 1 ist im Wesentlichen symmetrisch zu einer Längsebene durch die Längsachse des Geräteträgers 1.

In dem gezeigten Ausführungsbeispiel sind das erste Isolationsteil 2 und das zweite Isolationsteil 3 als komplementäre Isolationsteile ausgebildet, die an gegenüberliegenden Seiten des Geräteträgers 1 radial zur Längsachse auf den Geräteträger aufgesetzt werden. Sie decken jeweils einen Teilbereich der Umfangskontur des Geräteträgers ab, wobei in dieser Ausführungsform ein Teilbereich der Hälfte der Umfangskontur entspricht. Aufgrund der Symmetrie der Umfangskontur können das erste und zweite Isolationsteil 2 und 3 identisch ausgebildet sein. Das Isolationsteil weist in seiner Innenkontur im Frontbereich eine Gerätehalteraussparung 1 und im Basisbereich eine Trägerelement-, bzw. Basisteilaussparung 12 auf. Aufgrund des kleineren Durchmessers des Trägerelements 5 gegenüber dem Gerätehalter 6 bildet sich an der Innenkontur des Isolationsteils eine Stufe13. Weiter ist in der Innenkontur für die Schürze 10 eine Vertiefung 14 und für die Einführelemente 9 eine Aussparung 15 vorgesehen.

In der in Figur 1 gezeigten Ausführungsform entspricht die Länge von Gerätehalteraussparung 1 und Basisteilaussparung 12 im Wesentlichen der Länge des Gerätehalters 6 und des Basiselements 4 mit Trägerelement 5. Die Stufe 13 liegt somit am Boden des Gerätehalters 6 an. Die Innenkonturen von erstem und zweitem Isolationsteil 2 und 3 liegen somit über die gesamte Länge des Geräteträgers 1 an diesem formschlüssig an. Grundsätzlich ist es aber auch möglich, dass z. B. die Gerätehalteraussparung 11 länger als der Gerätehalter 6 und die Trägerelement-, bzw. Basisteilaussparung 12 kürzer als das Trägerelement ausgebildet sind. Bei dieser Variante bildet sich zwischen dem Boden des Gerätehalters 6 und der Stufe 13 ein abgeschlossener Zwischenraum. Eine Luftzirkulation ist nicht möglich, da der Geräteträger 1 an seinem Basisende und an seinem Frontende von dem ersten. bzw, zweiten Isolationsteil umschlossen wird, weil die Innenkonturen am Aussenumfang des Geräteträgers anliegen.

Der Aussenumfang der Isolationsteile 2 und 3 wird durch plane, senkrecht zu einander stehende Ebenen gebildet. Auf der Seite der Innenkontur sind neben der Innenkontur Anschlussflächen 16 und 17 ausgebildet, die in Längsrichtung des Geräteträgers 1 verlaufen. Die Anschlussflächen weisen Verbindungselemente auf, um die beiden Isolationsteil 2 und 3 mit einander verbinden zu können. Als Verbindungselemente sind auf der Anschlussfläche 16 ein abstehender Längssteg 18 und auf der Anschlussfläche 17 eine in die Fläche eingelassene Längsrille 19 vorgesehen.

Die Isolationsteil 2 und 3 passen mit ihrer Innenkontur formschlüssig auf die Aussenkontur des Geräteträgers 1. Zur Montage am Geräteträger 1 werden die Isolationsteile 2 und 3 von einander gegenüberliegenden Seiten in radialer Richtung auf den Geräteträger 1 aufgesetzt. Dabei greifen die Stege 18 in die Rillen 19 und bilden vorzugweise eine reibschlüssige Verbindung mit einander, so dass die Isolationsteile 2 und 3 am Geräteträger anliegend gehalten werden. Es ist auch möglich, dass sich zwischen einem Isolationsteil und dem Geräteträger ein Reibschluss ausbildet. Beispielsweise kann zwischen dem Gerätehalter 6 und der Gerätehalteraussparung 11 eine Klemmverbindung ausgebildet sein. Hierfür kann z. B. die Gerätehalteraussparung 11 geringfügig enger ausgebildet sein als die Aussenkontur des Gerätehalters 6, so dass die Gerätehalteraussparung 11 beim Aufsetzen des Isolationsteils geringfügig aufgeweitet wird und am Isolationsteil festklemmt.

In zusammengefügtem Zustand der Isolationsteile 2 und 3 liegen die Anschlussflächen 16 und 17 aufeinander und die Isolationsteil 2 und 3 bilden eine Isolierung um den Geräteträger 1, die diesen um den gesamten Umfang umgibt aber die Basisfläche 7 und die Frontseite 8 frei lässt. Die Isolierung ist quaderförmig mit rechtwinkligen Ebenen ausgebildet. An die Ebenen können Isolierstoffplatten zur Isolation der Gebäudewand angesetzt werden, ohne dass diese für eine komplizierte Kontur des Geräteträgers zugeschnitten werden müssen. Die Dicke der Wand der Isolationsteile kann z. B. 1 - 10 cm betragen und kann auf das Isoliersystem der Gebäudewand abgestimmt werden. Hierfür können unterschiedliche Isolationsteile mit gleicher Innenkontur für einen bestimmten Geräteträger aber mit verschiedenen Dicken hergestellt werden.

In Figur 2 ist eine Variante des Geräteträgers mit Isolierung gezeigt. Der Geräteträger 1 weist als Gerätehalter 6' eine Halterplatte auf, von der wiederum eine Schürze 10 zur Befestigung am Trägerelement 5 des Basiselements 4 abragt. Gegenüber der Seite mit der Schürze 10 weist der Gerätehalter 6' eine Frontseite 8 auf, die eine mittlere Öffnung 20 zum Inneren des Trägerelements 5 hin aufweist.

Die Isolationsteile 2 und 3 sind in dieser Variante jeweils in ein Basisisolierelement 21 und 21' und ein Frontisolierelement 22 und 22' unterteilt. So ergibt sich ein modularer Aufbau der Isolierung für den Geräteträger 1 mit vier Modulteilen. Die Basisisolierelemente 21 und 21' und die Frontisolierelemente 22 und 22' weisen einander zugewandte Anschlussflächen 26 auf, mit welchen jeweils ein Basisisolierelement und ein Frontisolierelement an einander aufliegen. Die Innenkontur der Frontisolierelemente 22, 22' ist an die Aussenkontur der Schürze 10 angepasst. Die Frontisolierelemente 22, 22' können somit die Länge der Schürze 10 haben während die Basisisolierelemente 21, 21' die Länge des Trägerelements 5 haben. Es können verschiedene Basisisolierelemente 21, 21' mit unterschiedlichen Längen vorgesehen werden, so dass auf unterschiedliche Längen des Geräteträgers 1 eingegangen werden kann. Bei der Montage des Geräteträgers 1 kann zunächst das Basiselement 4 an einer Wandfläche befestigt werden. Anschliessend können die Basisisolierelemente 21 und 21' von entgegen gesetzten Seiten an Basiselement 4 und Geräteträger 5 angesetzt werden. Dann kann der Gerätehalter aufgesteckt und die Frontisolierelemente 22 und 22' angebracht werden. Grundsätzlich können auch zuerst alle Elemente des Geräteträgers 1 zusammen gebaut und an der Wand montiert werden und erst anschliessend alle vier Isolierstücke 21, 21', 22 und 22' der Isolierung am Geräteträger 1 angeordnet werden. In zusammengesetztem Zustand der Isolierung liegen die Anschlussflächen 16, 17 und 26 flächig auf einander und der Geräteträger 1 ist zwischen der Frontseite 8 des Gerätehalter 6' und der Basisfläche von der Isolierung formschlüssig umgeben.

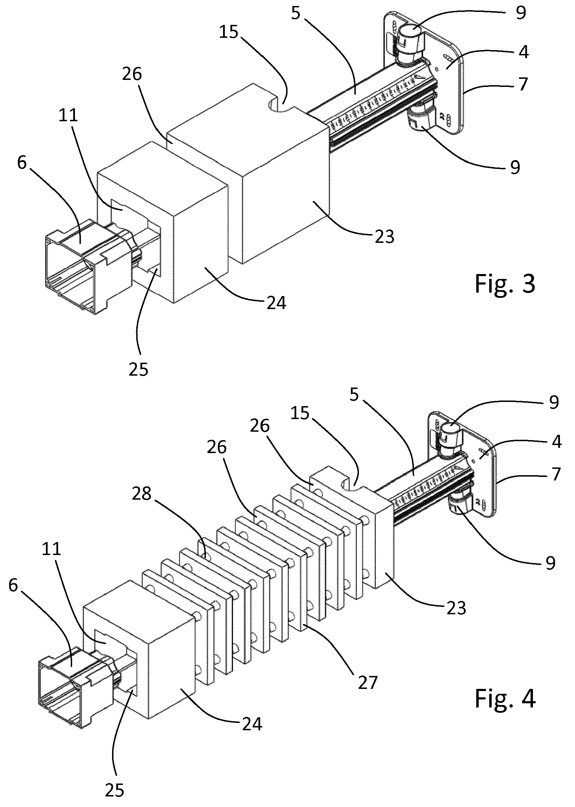

In Figur 3 ist eine zweite Ausführungsform eines Geräteträgers 1 zur Befestigung eines Geräts an einer Gebäudewand mit einer zweiteiligen Isolierung bestehend aus einem ersten Isolationsteil in Form eines Basisisolationsteils 23 und einem zweiten Isolationsteil in Form eines Frontisolationsteils 24 nach der vorliegenden Erfindung gezeigt. Das Basisisolationsteil 23 und das Frontisolationsteil 24 sind röhrenförmig mit einem quaderförmigen Aussenumfang ausgebildet. Der Aussenumfang der beiden Teile 23 und 24 ist gleich. Sie weisen jeweils eine innere Durchgangsöffnung 25 mit einer Innenkontur auf, die auf die Aussenkontur des Geräteträgers abgestimmt ist. Im vorliegenden Beispiel weist das Basisisolationsteil 23 eine Innenkontur auf, die auf das Trägerelement 5 abgestimmt ist und demnach eine im Wesentlichen hexagonale Durchgangsöffnung aufweist. Das Frontisolationsteil 24 weist eine Innenstruktur entsprechend dem Gerätehalter 6 und demnach eine rechteckige Durchgangsöffnung auf. Die einander zugewandten Enden des Basisisolationsteils 23 und des Frontisolationsteils 24 bilden Anschlussflächen 26 aus, die an einander zu liegen kommen.

Zur Montage der zweiteiligen Isolierung wird zunächst das Basisisolationsteil 23 auf das Basiselement 4 mit dem Trägerelement 5 aufgeschoben, so dass die Innenkontur der Öffnung formschlüssig an der Aussenkontur des Basiselements und des Trägerelements anliegt. Die Aussparung 15 nimmt das Einführelement 9 auf. Anschliessend kann das Frontisolationsteil 24 über das Trägerelement 5 aufgeschoben werden und der Gerätehalter 6 am Ende des Trägerelements 5 angebracht werden. Die Befestigung des Gerätehalters 6 am Trägerelement 5 kann von der Innenseite des Gerätehalters erfolgen, da die Frontseite des Gerätehalters offen bleibt. Ein solcher Befestigungsmechanismus ist z. B. in der Anmeldung CH 00867/11 der Anmelderin beschrieben.

In Figur 4 ist eine Variante der Ausführungsform des Geräteträgers aus Figur 3 gezeigt, die zwischen einem Basisisolationsteil 23 und einem Frontisolationsteil 24 mehrere Abstandsisolationsteile 27 aufweist. Die Abstandsisolationsteile 27 sind im Wesentlich analog des Basisisolationsteils 23 aufgebaut. Sie weisen jedoch eine kürzere Länge auf. Die Abstandsisolationsteile 27 sind scheibenartig mit einer Durchgangsöffnung 25 geformt, deren Umfangsfläche der Aussenkontur des Trägerelements 5 entspricht. Je nach Länge des Trägerelements 5 können unterschiedlich viel Abstandsisolationsteile 27 verwendet werden. Die Isolierung für den Geräteträger wird somit modular zusammengesetzt, wobei die Abstandsisolationsteile 27, das Frontisolationsteil 24 und das Basisisolationsteil 23 einen modularen Baukasten bilden.

Die einzelnen Abstandsisolationsteile 27 weisen einander zugewandte Anschlussflächen 26 auf, wobei an einer Seite eines Abstandsisolationsteils 27 mehrere Zapfen 28 von der Anschlussfläche 26 abragen und an der gegenüberliegenden Seite Vertiefungen (nicht sichtbar) vorgesehen sind. Die Zapfen können in die Vertiefungen eingreifen und dienen somit der Ausrichtung der Abstandsisolationsteile 27 zu einander und deren Befestigung. Die Zapfen können z. B. reibschlüssig in die Vertiefungen eingreifen.

In zusammengesetztem Zustand bildet die Isolierung des Geräteträgers wiederum einen Quader mit planen Ebenen für die Anlage von Isolierstoffplatten für die Isolierung der Gebäudewand.

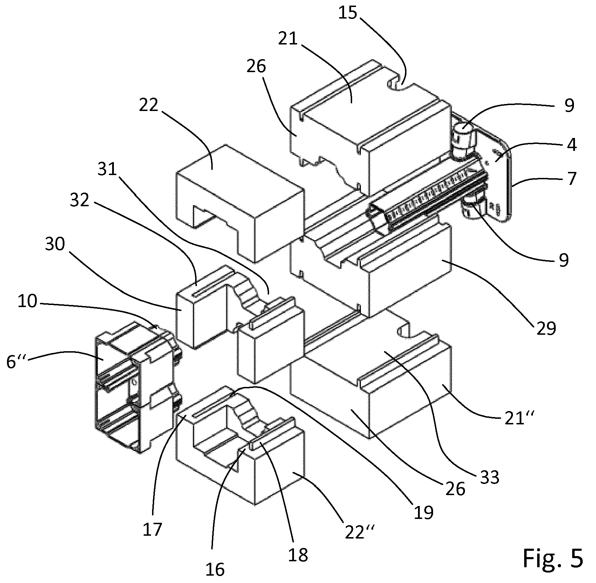

In Figur 5 ist eine dritte Ausführungsform eines Geräteträgers 1 zur Befestigung eines Geräts an einer Gebäudewand mit einer mehrteiligen Isolierung nach der vorliegenden Erfindung gezeigt. Die mehrteilige Isolierung ist modular aufgebaut und umfasst zwei Basisisolierelemente 21 und 21 ", zwei Frontisolierelemente 22 und 22' sowie ein Basiszwischenelement 29 und ein Frontzwischenelement 30. Der Gerätehalter 6" weist in dieser Variante eine im Gegensatz zur Dose aus Figur 1 verbreiterte Gerätedose auf. Der Frontbereich der Isolierung wird von den Frontisolierelemente 22 und 22' und dem Frontzwischenelement 30 gebildet, wobei die Frontisolierelemente 22 und 22' im Wesentlichen den Elementen aus Figur 2 entsprechen können. Das Frontzwischenelement 30 dient der Vergrösserung der Innenkontur der Isolierung im Frontbereich, der den Teilbereich der Umfangskontur des Geräteträgers1 1 abdecken soll, der der Aussenkontur des Gerätehalter 6" entspricht. Das Frontzwischenelement 30 ist im z. B. U-förmig ausgestaltet und weist am Boden eine Auskerbung 31 auf, welche die Innenkontur zur Isolation der Schürze 10 bildet. An seinen Flanken in Längsrichtung weist das Frontzwischenelement 30 Anschlussflächen 32, die Verbindungselemente zum Verbinden mit den Anschlussflächen 16 und 17 der Frontisolierelemente 22 und 22' aufweisen.

Das Basiszwischenelement 29 ist klotzförmig und entspricht der Länge der Basisisolierelemente 21 und 21'. Die Dicke wird derart gewählt, dass Basisisolierelemente 21 und 21" und das Basiszwischenelement 29 gemeinsam den gleichen Umfang aufweisen wie die Frontisolierelemente 22 und 22' und das Frontzwischenelement 30 in zusammen gesetztem Zustand. In der dargestellten Ausführungsform ist ein Basiselement 4 mit Trägerelement 5 vorgesehen. Das Basiszwischenelement 29 weist daher an einer Längsseite einen Innenkontur in Form einer Trägerelementaussparung, bzw. Basiselementaussparung 12 auf, die der Umfangskontur des Teilbereichs des Geräteträger 5 entspricht, der vom Basiszwischenelement 29 abgedeckt werden soll. Auf der gegenüberliegenden Längsseite ist keine Innenkontur vorgesehen, sondern eine grossflächige Anschlussfläche. Das Basisisolierelement 21" weist auf seiner nach innen gerichteten Seite ebenfalls keine Innenkontur, sondern eine komplementäre grossflächige Anschlussfläche 33 auf. Die grossflächigen Anschlussflächen kommen plan aufeinander zu liegen, wenn die Basisstücke der Isolierung zusammengesetzt werden. Alternativ könnte neben dem ersten Basiselement 4 mit Trägerelement 5 ein zweites Basiselement mit Trägerelement vorgesehen werden, der Kabel zum verbreiterten Gerätehalter 6" führen kann. In diesem Fall kann in der Anschlussfläche 33 und beidseitig am Basiszwischenelement 29 eine Innenkontur für die beiden parallel verlaufenden Trägerelemente vorgesehen werden.

In zusammengebautem Zustand liegen die Anschlussflächen aller sechs Modulisolierstücke, d. h. Basisisolierelemente 21 und 21", Frontisolierelemente 22 und 22', Basiszwischenelement 29 und Frontzwischenelement 30, an einander an. Dabei können die Verbindungselemente in einander greifen. Die Zwischenräume zwischen parallel verlaufenden Teilen des Geräteträgers, wie etwa vom Gerätehalter 6" abstehende Schürzen oder parallele Trägerelement, werden durch die Zwischenelemente 29 und 30 ausgefüllt. Auch bei diesem Geräteträger mit einer komplexen Umfangskontur werden alle Teilbereiche von einem Modul der Isolierung abgedeckt, so dass keine Wärmebrücken entstehen.

**Bezugszeichen**

| | | | |
|---|---|---|---|
| 1 | Geräteträger | 21, 21' | Basisisolierelement |
| 2 | erstes Isolationsteil | 22, 22' | Frontisolierelement |
| 3 | zweites Isolationsteil | 23 | Basisisolationsteil |
| 4 | Basiselement | 24 | Frontisolationsteil |
| 5 | Trägerelement | 25 | Durchgangsöffnung |
| 6,6,6" | Gerätehalter | 26 | Anschlussfläche |
| 7 | Basisfläche | 27 | Abstandsisolationsteil |
| 8 | Frontseite | 28 | Zapfen |
| 9 | Einführelement | 29 | Basiszwischenelement |
| 10 | Schürze | 30 | Frontzwischenelement |
| 11 | Gerätehalteraussparung | 31 | Auskerbung |
| 12 | Basiselementaussparung | 32 | Anschlussfläche |
| 13 | Stufe | 33 | Anschlussfläche |
| 14 | Vertiefung | | |
| 15 | Aussparung | | |
| 16 | Anschlussfläche | | |
| 17 | Anschlussfläche | | |
| 18 | Längssteg | | |
| 19 | Längsrille | | |
| 20 | Öffnung | | |

## Patentansprüche

1. Geräteträger zur Befestigung eines Geräts an einer Gebäudewand, umfassend:
- ein Basiselement (4) mit einer Basisfläche (7) zur Befestigung an der Gebäudewand und
- einen Gerätehalter (6, 6', 6") zur Aufnahme eines Geräts mit einer der Basisfläche (7) gegenüberliegenden Frontseite (8), wobei der Gerätehalter (6, 6', 6") eine Gerätedose zur Aufnahme eines elektrischen Gerätes ist,
**dadurch gekennzeichnet, dass**
- eine zumindest zweiteilige Isolierung vorgesehen ist, die den Geräteträger (1) zwischen der Basisfläche (7) und der Frontseite (8) umfangsseitig umgibt,
- wobei zumindest ein erstes Isolationsteil (2; 23) und ein zweites Isolationsteil (3; 24) vorgesehen sind, die jeweils eine Innenkontur aufweisen, die wenigstens einem Teilbereich einer Umfangskontur des Geräteträgers (1) entspricht,
- wobei die Innenkontur formschlüssig am Basiselement (4) und am Gerätehalter (6, 6', 6") anliegt und das erste Isolationsteil (2; 23) und das zweite Isolationsteil (3; 24) formschlüssig einander anschliessend anliegen.

2. Geräteträger nach Anspruch 1,**dadurch gekennzeichnet, dass** das erste Isolationsteil (2; 23) und das zweite Isolationsteil (3; 24) abnehmbar am Geräteträger (1) angeordnet sind.

3. Geräteträger nach Anspruch 1 oder 2, **dadurch gekennzeichnet, dass** zumindest eines der Isolationsteile (3, 3; 23, 24) reibschlüssig an dem Geräteträger (1) angeordnet ist.

4. Geräteträger nach einem der vorhergehenden Ansprüche, **dadurch gekennzeichnet, dass** ein Aussenumfang der Isolierung quaderförmig ausgebildet ist.

5. Geräteträger nach einem der vorhergehenden Ansprüche, **dadurch gekennzeichnet, dass** erstes und zweites Isolationsteil (2, 3; 23, 24) jeweils Anschlussflächen (16, 17; 26) aufweisen, die an einander anliegen, wobei wenigstens eine der Anschlussflächen (16, 17; 26) Verbindungselemente (18, 19) zum Verbinden von erstem und zweitem Isolationsteil (2, 3; 23, 24) aufweist.

6. Geräteträger nach einem der vorhergehenden Ansprüche, **dadurch gekennzeichnet, dass** die Isolationsteile aus expandiertem Polystyrol bestehen.

7. Geräteträger nach einem der vorhergehenden Ansprüche, **dadurch gekennzeichnet, dass** zwischen erstem und zweitem Isolationsteil (2, 3) wenigstens ein Zwischenelement (29; 30) vorgesehen ist, das an den Anschlussflächen (16, 17) von erstem und zweiten Isolationsteil (2, 3) anschliesst.

8. Geräteträger nach einem der vorhergehenden Ansprüche, **dadurch gekennzeichnet, dass** die Innenkontur von erstem und/oder zweitem Isolationsteil (2, 3; 23, 24) an einem Frontende eine Gerätehalteraussparung (11) entsprechend der Umfangskontur des Gerätehalters (6, 6', 6") und an einem Basisende eine Basiselementaussparung (12) entsprechend der Umfangskontur des Basiselements (4) aufweist, wobei die Gerätehalteraussparung (12) und die Basiselementaussparung (11) unterschiedliche Durchmesser in Bezug auf eine Längsachse des Geräteträgers (1) zwischen Basiselement (4) und Gerätehalter (6, 6', 6") aufweisen.

9. Geräteträger nach einem der vorhergehenden Ansprüche, **dadurch gekennzeichnet, dass** das erste Isolationsteil (2) und das zweite Isolationsteil (3) im Wesentlichen in Längsrichtung des Geräteträgers (1) verlaufende Anschlussflächen (16, 17; 33) aufweisen.

10. Geräteträger nach einem der vorhergehenden Ansprüche, **dadurch gekennzeichnet, dass** erstes und zweites Isolationsteil jeweils ein Basisisolierelement (21, 21') und ein Frontisolierelement (22, 22') aufweisen, wobei Basisisolierelement (21, 21') und Frontisolierelement (22, 22') zumindest teilweise quer zur Längsrichtung verlaufende Anschlussflächen (26) aufweisen, die an einander anliegen.

11. Geräteträger nach dem vorhergehenden Anspruch, **dadurch gekennzeichnet, dass**, wenigstens ein Abstandselement vorgesehen ist, das in Längsrichtung zwischen Basisisolierelement (21, 21') und Frontisolierelement (22, 22') vorgesehen ist und an diesen anliegt.

12. Geräteträger nach einem der Ansprüche 10 oder 11, **dadurch gekennzeichnet, dass** eine Gerätehalteraussparung (11) an einem Frontisolierelement (22, 22') und eine Basiselementaussparung (12) an einem Basisisolierelement (21, 21') des ersten und zweiten Isolationsteils (2, 3) vorgesehen sind.

13. Geräteträger nach einem der Ansprüche 1 - 8, **dadurch gekennzeichnet, dass** das erste Isolationsteil (23) und das zweite Isolationsteil (24) im Wesentlichen quer zur Längsrichtung des Geräteträgers (1) verlaufende Anschlussflächen (26) aufweisen, die an einander anliegen.

14. Geräteträger nach einem der Ansprüche 1 - 8, **dadurch gekennzeichnet, dass** das erste Isolationsteil als röhrenartiges Basisisolationsteil (23) mit einer Innenkontur entsprechend der Umfangskontur des Basiselements (4) und das zweite Isolationsteil als röhrenartiges Frontisolationsteil (24) mit einer Innenkontur entsprechend der Umfangskontur des Gerätehalters (6, 6', 6") vorgesehen ist.

15. Geräteträger nach einem der Ansprüche 13 oder 14, **dadurch gekennzeichnet, dass** wenigstens ein Abstandsisolationsteil (27) zwischen Basisisolationsteil (23) und Frontisolationsteil (24) vorgesehen ist, dessen Innenkontur im Wesentlichen der Innenkontur des Basisisolationsteils (23) entspricht.

16. Geräteträger nach einem der vorhergehenden Ansprüche, **dadurch gekennzeichnet, dass** sich die Isolierung modular aus einer Mehrzahl von Modulen zusammensetzt, wobei als Module erste Isolationsteile (2), zweite Isolationsteile (3), Basisisolierelemente (21, 21'), Frontisolierelemente (22, 22'), Abstandselemente, Zwischenelemente (29, 30), Basisisolationsteile (23), Frontisolationsteile (24) und/oder Abstandsisolationsteile (27) vorgesehen sein können.

17. Geräteträger nach einem der vorhergehenden Ansprüche, **dadurch gekennzeichnet, dass** wenigstens ein Isolationsteil eine Längenskala in Längsrichtung des Geräteträgers aufweist.

## Claims

1. A device carrier for fastening a device to a building wall, comprising:
- a base element (4) having a base surface (7) for fastening to the building wall and
- a device holder (6, 6', 6") for receiving a device having a front side (8) opposite the base surface (7), the device holder (6, 6', 6") being a device box for receiving an electrical device,
**characterized in that**
- an at least two-part insulation is provided, which circumferentially surrounds the device carrier (1) between the base surface (7) and the front side (8),
- at least one first insulation part (2; 23) and a second insulation part (3; 24) being provided, which each have an inner contour corresponding at least to a portion of a circumferential contour of the device carrier (1),
- the inner contour bearing in a form-fitting manner against the base element (4) and against the device holder (6, 6', 6"), and the first insulation part (2; 23) and the second insulation part (3; 24) bearing against one another in a form-fitting and adjoining manner.

2. The device carrier according to claim 1, **characterized in that** the first insulation part (2; 23) and the second insulation part (3; 24) are arranged removably on the device carrier (1).

3. The device carrier according to claim 1 or 2, **characterized in that** at least one of the insulation parts (3, 3; 23, 24) is arranged on the device carrier (1) in a frictionally engaged manner.

4. The device carrier according to one of the preceding claims, **characterized in that** an outer circumference of the insulation is cuboidal.

5. The device carrier according to one of the preceding claims, **characterized in that** the first and second insulation part (2, 3; 23, 24) each have terminal faces (16, 17; 26) which bear against one another, at least one of the terminal faces (16, 17; 26) having connection elements (18, 19) for connecting the first and second insulation part (2,3; 23,24).

6. The device carrier according to one of the preceding claims, **characterized in that** the insulation parts consist of expanded polystyrene.

7. The device carrier according to one of the preceding claims, **characterized in that** at least one intermediate element (29; 30) is provided between the first and second insulation part (2, 3) and adjoins the terminal faces (16, 17) of the first and second insulation part (2,3).

8. The device carrier according to one of the preceding claims, **characterized in that** the inner contour of the first and/or second insulation part (2, 3; 23, 24) at a front end has a device holder recess (11) corresponding to the circumferential contour of the device holder (6, 6', 6") and at a base end has a base element recess (12) corresponding to the circumferential contour of the base element (4), the device holder recess (12) and the base element recess (11) having different diameters with respect to a longitudinal axis of the device carrier (1) between base element (4) and device holder (6, 6', 6").

9. The device carrier according to one of the preceding claims, **characterized in that** the first insulation part (2) and the second insulation part (3) have terminal faces (16, 17; 33) extending substantially in the longitudinal direction of the device carrier (1).

10. The device carrier according to one of the preceding claims, **characterized in that** the first and second insulation part each have a base insulation element (21, 21') and a front insulation element (22, 22'), the base insulation element (21, 21') and front insulation element (22, 22') having terminal faces (26) which extend at least partially transversely to the longitudinal direction and which bear against one another.

11. The device carrier according to the preceding claim, **characterized in that** at least one spacer element is provided, which is provided in the longitudinal direction between the base insulation element (21, 21') and the front insulation element (22, 22') and bears thereagainst.

12. The device carrier according to one of claims 10 or 11, **characterized in that** a device holder recess (11) is provided on a front insulation element (22, 22') and a base element recess (12) is provided on a base insulation element (21, 21') of the first and second insulation part (2, 3).

13. The device carrier according to one of claims 1-8, **characterized in that** the first insulation part (23) and the second insulation part (24) have terminal faces (26) which extend substantially transversely to the longitudinal direction of the device carrier (1) and which bear against one another.

14. The device carrier according to one of claims 1-8, **characterized in that** the first insulation part is provided as a tubular base insulation part (23) having an inner contour corresponding to the circumferential contour of the base element (4), and the second insulation part is provided as a tubular front insulation part (24) having an inner contour corresponding to the circumferential contour of the device holder (6, 6', 6").

15. The device carrier according to one of claims 13 or 14, **characterized in that** at least one spacer insulation part (27) is provided between the base insulation part (23) and front insulation part (24), the inner contour of which corresponds substantially to the inner contour of the base insulation part (23).

16. The device carrier according to one of the preceding claims, **characterized in that** the insulation is composed in a modular manner from a plurality of modules, it being possible for first insulation parts (2), second insulation parts (3), base insulation elements (21, 21'), front insulation elements (22, 22'), spacer elements, intermediate elements (29, 30), base insulation parts (23), front insulation parts (24) and/or spacer insulation parts (27) to be provided as modules.

17. The device carrier according to one of the preceding claims, **characterized in that** at least one insulation part has a length scale in the longitudinal direction of the device carrier.

## Revendications

1. Support d'appareil destiné à fixer un appareil à un mur de bâtiment, comprenant :
- un élément de base (4) avec une surface de base (7) pour la fixation au mur de bâtiment, et
- un moyen de maintien d'appareil (6, 6', 6") destiné à recevoir un appareil avec un côté frontal (8) opposé à la surface de base (7), le moyen de maintien d'appareil (6, 6', 6") étant un boîtier d'appareil destiné à recevoir un appareil électrique,
**caractérisé en ce que**
- il est prévu une isolation en deux parties, laquelle entoure le support d'appareil (1) du côté du pourtour entre la surface de base (7) et le côté frontal (8),
- où il est prévu au moins une première partie d'isolation (2 ; 23) et une deuxième partie d'isolation (3 ; 24) présentant respectivement un contour intérieur correspondant au moins à une région partielle d'un contour périphérique du support d'appareil (1),
- où le contour intérieur s'applique par complémentarité de forme sur l'élément de base (4) et sur le moyen de maintien d'appareil (6, 6', 6"), et la première partie d'isolation (2 ; 23) et la deuxième partie d'isolation (3 ; 24) s'appliquent l'une contre l'autre par complémentarité de forme.

2. Support d'appareil selon la revendication 1, **caractérisé en ce que** la première partie d'isolation (2 ; 23) et la deuxième partie d'isolation (3 ; 24) sont disposées de façon amovible sur le support d'appareil (1).

3. Support d'appareil selon la revendication 1 ou 2, **caractérisé en ce qu'**au moins l'une des parties d'isolation (3, 3 ; 23, 24) sont disposées par friction sur le support d'appareil (1).

4. Support d'appareil selon l'une des revendications précédentes, **caractérisé en ce qu'**un pourtour extérieur de l'isolation est conçu de façon parallélépipédique.

5. Support d'appareil selon l'une des revendications précédentes, **caractérisé en ce que** les première et deuxième parties d'isolation (2, 3 ; 23, 24) présentent respectivement des surfaces de raccordement (16, 17 ; 26) adjacentes, au moins l'une des surfaces de raccordement (16, 17 ; 26) présentant des éléments d'assemblage (18, 19) destinées à relier les première et deuxième parties d'isolation (2, 3 ; 23, 24).

6. Support d'appareil selon l'une des revendications précédentes, **caractérisé en ce que** les parties d'isolation sont constituées de polystyrène expansé.

7. Support d'appareil selon l'une des revendications précédentes, **caractérisé en ce qu'**entre les première et deuxième parties d'isolation (2, 3), il est prévu au moins un élément intermédiaire (29, 30) raccordé aux surfaces de raccordement (16, 17) des première et deuxième parties d'isolation (2, 3).

8. Support d'appareil selon l'une des revendications précédentes, **caractérisé en ce que** le contour intérieur de la première et/ou de la deuxième partie d'isolation (2, 3 ; 23, 24) présente un évidement de moyen de maintien d'appareil (11) à une extrémité frontale, correspondant au contour périphérique du moyen de maintien d'appareil (6, 6', 6"), et un évidement d'élément de base (12) à une extrémité de base, correspondant au contour périphérique de l'élément de base (4), l'évidement de moyen de maintien d'appareil (12) et l'évidement d'élément de base (11) présentant des diamètres différents par rapport à un axe longitudinal du support d'appareil (1) entre l'élément de base (4) et le moyen de maintien d'appareil (6, 6', 6").

9. Support d'appareil selon l'une des revendications précédentes, **caractérisé en ce que** la première partie d'isolation (2) et la deuxième partie d'isolation (3) présentent des surfaces de raccordement (16, 17; 33) s'étendant essentiellement dans le sens longitudinal du support d'appareil (1).

10. Support d'appareil selon l'une des revendications précédentes, **caractérisé en ce que** les première et deuxième parties d'isolation présentent respectivement un élément d'isolation de base (21, 21') et un élément d'isolation frontal (22, 22'), l'élément d'isolation de base (21, 21') et l'élément d'isolation frontal (22, 22') présentant des surfaces de raccordement (26) adjacentes s'étendant au moins partiellement transversalement au sens longitudinal.

11. Support d'appareil selon la revendication précédente **caractérisé en ce qu'**il est prévu au moins un élément d'espacement, lequel est prévu entre l'élément d'isolation de base (21, 21') et l'élément d'isolation frontal (22, 22') dans le sens longitudinal et s'applique sur ceux-ci.

12. Support d'appareil selon l'une des revendications 10 ou 11, **caractérisé en ce qu'**il est prévu un évidement de moyen de maintien d'appareil (11) sur un élément d'isolation frontal (22, 22') et un évidement d'élément de base (12) sur un élément d'isolation de base (21,21') des première et deuxième parties d'isolation (2, 3).

13. Support d'appareil selon l'une des revendications 1-8, **caractérisé en ce que** la première partie d'isolation (23) et la deuxième partie d'isolation (24) présentent des surfaces de raccordement (26) adjacentes s'étendant essentiellement transversalement au sens longitudinal du support d'appareil (1).

14. Support d'appareil selon l'une des revendications 1-8, **caractérisé en ce que** la première partie d'isolation est conçue comme une partie d'isolation de base tubulaire (23) avec un contour intérieur correspondant au contour périphérique de l'élément de base (4), et la deuxième partie d'isolation est conçue comme une partie d'isolation frontale tubulaire (24) avec un contour intérieur correspondant au contour périphérique du moyen de maintien d'appareil (6, 6', 6").

15. Support d'appareil selon la revendication 13 ou 14, **caractérisé en ce qu'**il est prévu au moins une partie d'isolation d'espacement (27) entre la partie d'isolation de base (23) et la partie d'isolation frontale (24), dont le contour intérieur correspond essentiellement au contour intérieur de la partie d'isolation de base (23).

16. Support d'appareil selon l'une des revendications précédentes, **caractérisé en ce que** l'isolation est assemblée de façon modulaire à partir d'une pluralité de modules, où des premières parties d'isolation (2), des deuxièmes parties d'isolation (3), des éléments d'isolation de base (21, 21'), des éléments d'isolation frontaux (22, 22'), des éléments d'espacement, des éléments intermédiaires (29, 30), des parties d'isolation de base (23), des parties d'isolation frontales (24) et/ou des parties d'isolation d'espacement (27) peuvent être prévus en tant que modules.

17. Support d'appareil selon l'une des revendications précédentes, **caractérisé en ce qu'**au moins une partie d'isolation présente une échelle de longueur dans le sens longitudinal du support d'appareil.
